# EUROPEAN PATENT APPLICATION

(11) **EP 2 400 149 A1**
(43) Date of publication of application: **28.12.2011**
(21) Application number: 09840259.7
(22) Date of filing: 17.02.2009
(51) Int. Cl.: F03D 7/02, H02P 9/08

(54) **METHOD AND APPARATUS FOR POWERING A WIND TURBINE**

(71) Applicant: Gamesa Innovation & Technology, S.L., 31621 Pamplona (ES)
(72) Inventor: LEKERIKA UGARTE, Bittor, E-48170 Sarriguren (ES)
(86) International application number: PCT/ES2009/070029
(87) International publication number: WO 2010/094814

(57) **Abstract**

**Summary.**

Method to energize a wind turbine following a grid voltage failures. Having detected the return of grid voltage, the Grid Connection Control System (GCCS) begins to be powered by an Uninterruptable Power Supply (UPS). The GCCS closes the grid circuit breaker once the electrical protection devices have been powered up.

The UPS utilized by this energization method is briefly in standalone and remains disconnected when lacking grid voltage, solely entering into operation when the grid voltage has recovered, requiring no auxiliary voltage.

## Description

### Object of the invention.

The invention describes the method of driving some electrical elements that, by guaranteeing the operation of electrical protections, permit secure wind turbine energization. The aforementioned wind turbine is unattended at all times (without the physical presence of personnel).

### Background of the invention.

As unattended facilities, wind turbines facing a loss of grid voltage come to a complete halt without power of any sort; yet are ready to be energized on the return of voltage to the grid. Under these situations, wind turbine energization occurs with no precursory verification. Faults in the electrical installation that could have provoked an absence of voltage are undetectable prior to the return of voltage, which constitutes a problem to resolve.

The presence of mechanisms for securely energizing unattended facilities is desirable. This thus requires systems capable of automatically verifying the facility prior to energization and guaranteeing immediate triggering of electrical protections during and after energization.

Protective devices essentially work with three technologies:
a. Electromechanical equipment requiring no auxiliary voltage. These are generally protections used for low voltage. Overcurrents in any of the phases trigger the equipment.
b. Self-powered devices. The power supply shall be generated from a certain level of current in any phase. Under this threshold, the device is inoperative.
c. Devices requiring an external power supply. These offer more sophisticated performance. They are operative as long as there is voltage.

The devices in the first group are effective even in energizing facilities. They are used under low voltage. Fuses can be included in this group and can also work under medium voltage.

Protections pertaining to the second group are operative when the installation is consuming a minimum current. Energizing facilities having protections of this type presents various problems. Some in particular are: a) electronics startup time when energizing on a fault, b) device not starting up when energization is on a fault in a phase differing from the phase used by the device to power itself, and c) energization on faults of high impedance where the current is insufficient to self-power the device.

Triggering of devices in the third group is guaranteed whenever powered. Devices offering more sophisticated performance belong to this group. A UPS (Uninterrupted Power Supply) helps maintain the required voltage stable for protective devices even when lacking grid voltage. In order to maintain the power supply during long intervals of time without grid voltage, the UPS needs to have batteries with an extended capacity permitting lengthy standalone periods. It should be kept in mind that, given the technology utilized, the batteries could require regular replacement. These two points increase both the initial and maintenance costs of the machine.

A real case of grid disconnection could last for 24 hours and the standalone time of a UPS (such as the ones currently used for wind turbines) usually fails to reach 1 hour. If the UPS is running during a disconnected period, it will cease before the return of grid voltage. It should thus work solely from when the grid voltage has been reestablished.

There are other patents utilizing the UPS to cover these grid voltage absences or to reactivate wind turbines following a disconnection. For instance, patent WO03/058789 uses a UPS to power a control system in a wind turbine during short-term grid voltage faults. The control system supplies the generator through a series of impedances furnished between the generator and the grid. Nonetheless, this does not address securely energizing machines as our case in hand.

### Description of the invention.

An object of the invention is the activation of the electrical protections for detecting possible faults in the electrical facilities of a wind turbine prior to energization following a period of disconnection from the grid.

Another object of the invention is a specified procedure to follow for furnishing the supply voltage both for protective devices as well as the grid connection breaker.

With a view to attaining the foregoing, another object of the invention entails the use of a UPS activated by grid voltage recovery and used to supply power to the grid connection control system.

Another object of the invention is UPS activation solely when necessary. This thus avoids the use of extended-capacity batteries, thereby permitting the use of battery technologies more suitable to the application as they call for an economic investment that is not as large. The selection of which battery technology to utilize must take into account that the capacity of the batteries could be affected by prolonged periods of inactivity and by the ambient temperature. These two factors begin appearing between the acquisition of the device and the installation of the machine, becoming increasingly evident while the system is operative in the machine.

Usually, when facing a grid voltage drop, a wind turbine does not disconnect from the grid electrically. With the present method, when detecting the lack of voltage, the wind turbine disconnects from the grid and subsequently reconnects following voltage recovery.

### Brief description of the drawings.

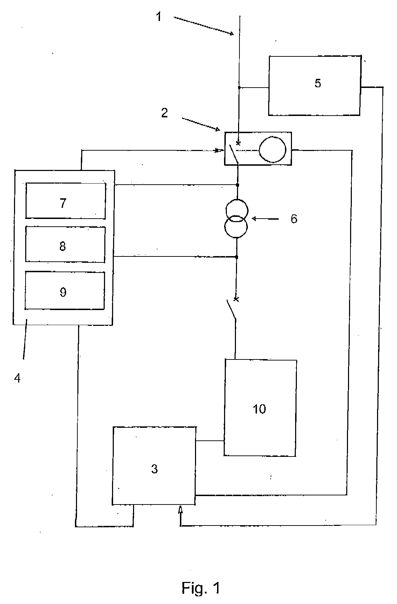

Figure 1 displays a circuit with the connection between the different elements used for energizing the machine.

### Description of the preferential embodiment.

As shown in figure 1, when the grid (1) lacks voltage, V_{grid}=0, and after a certain period of time has elapsed (depending on the quality of the point of connection), the grid connection control system (4) orders the electrical isolation of the wind turbine by opening the grid circuit breaker (2). If the intention were to leave the protective and/or control systems powered up so as to supply electrical protections on voltage recovery, then it would be normal to trigger the UPS to begin using its battery power. This invention does not work in this way. Following the wind turbine's disconnection from the grid (1), and having elapsed the required time for steps prior to de-energizing the grid connection control system (4), the UPS (3) will no longer supply the grid connection control system (4), the grid circuit breaker (2) and possibly other essential wind turbine services (10).

The total time for the UPS to deactivate following a grid voltage drop is a duration so as to allow the machine to have a controlled stop and remain connected in case of quick recovery of the grid voltage. Within this time span, it is also taken into consideration that after having opened the grid circuit breaker (2), the UPS must supply the spring load for this circuit breaker so as to prepare it for the future close order.

The grid connection control system (4) essentially comprises wind turbine electrical protection devices (7) and a control system (8) to manage operating sequences for the elements involved in secure grid connection.

The electrical protections (7) are at least elements that safeguard the wind turbine electrically during and following its energization. These could be located upstream from the transformer (6) that adapts the voltage from the grid to the voltage for the wind turbine, or also downstream from this transformer (6). Electrical protections (7) could be as simple or complex as the application may require, thus permitting, for instance, a preliminary insulation check of the installation

A communications system (9) could likewise form part of the grid connection control system (4). This allows the possibility of adding a remote dependency to the cut-off permission for the grid breaker (2), such as the sequential connection of wind turbines in a wind farm.

On recovery of the grid voltage (1), a grid voltage detection system requiring no auxiliary voltage (5) installed at the connection, detects the voltage recovery and gives the startup order to the UPS (3), which powers up both the grid connection control system (7) and the grid breaker (2). The control system (8) can monitor correct startup of electrical protections (7) and communications systems (9). If the results are correct, the order will be sent to close the grid circuit breaker (2).

The use of a UPS (3) only activating when the grid voltage has been reestablished enables the employment of low-capacity batteries and therefore more expensive technologies such as lithium ion or NiCad, which require less maintenance while having a broader operating temperature range and longer duration compared with conventional batteries.

## Claims

1. Wind turbine energization method, **characterized by**:
- when there is no voltage on the grid, the wind turbine remains disconnected from the grid
- on grid voltage recovery, an uninterruptable power supply system is activated
- an uninterruptable power supply supplies power to a grid connection control system
- a grid connection control system orders the grid breaker to close

2. Method according to the first claim, **characterized** because the uninterruptable power supply deactivates after a period of time without grid voltage.

3. Method according to the claims above, **characterized** because the grid connection control system has a control on the grid circuit breaker and comprises at least an electrical protection device for the wind turbine and at least a control device

4. Method according to the claims above, **characterized by** having an electrical protection device with measurements upstream and/or downstream from the transformer (6).

5. Method according to the claims above, **characterized by** having a control device that processes the operating sequences required to govern the grid circuit breaker.

6. Method according to the claims above, **characterized** because, in a wind farm with various wind turbines, the grid connection control system processes the grid circuit breaker signal so that wind turbines connect to the grid sequentially.

7. Wind turbine energization apparatus, **characterized** because it is equipped with a grid voltage detection sensor, an uninterruptable power supply and a grid connection control system.

8. Apparatus according to claim 7, **characterized** because the grid detection sensor generates a signal on detecting grid voltage.

9. Method according to claims 7-8, **characterized** because the UPS system deactivates after a period of time without grid voltage and activates with the external signal generated by the grid voltage detection sensor.

10. Apparatus according to claims 7-9, **characterized** because at least one electrical protection device is capable of checking the condition of the facility prior to energization so as to prevent electrical faults during energization.
